# EUROPÄISCHE PATENTSCHRIFT

(11) **EP 0 539 352 B1**
(45) Veröffentlichungstag und Bekanntmachung des Hinweises auf die Patenterteilung: **07.12.1994**
(21) Anmeldenummer: 92890228.7
(22) Anmeldetag: 23.10.1992
(51) Int. Cl.: C21C 5/52, C22B 1/00, C10B 53/00

(54) **Verfahren zum Entsorgen von organischen und anorganischen Stoffen**
Method of disposing of organic and inorganic substances
Procédé pour enlever des matières organiques et minérales

(30) Priorität: 24.10.1991 AT 2123/91
(43) Veröffentlichungstag der Anmeldung: 28.04.1993
(73) Patentinhaber: VOEST-ALPINE Industrieanlagenbau GmbH, A-4020 Linz (AT)
(72) Erfinder: Steins, Johannes, Dipl.-Ing., A-4210 Gallneukirchen (AT); Berger, Harald, Dipl.-Ing. Dr., A-4210 Linz (AT); Köller, Otto, Dipl.-Ing., A-8700 Leoben (AT)
(74) Vertreter: Wolfram, Gustav, Dipl.-Ing.

(56) Entgegenhaltungen:
- EP-A- 0 208 881
- DE-A- 3 207 203
- DE-A- 3 212 534
- DE-B- 1 280 899
- FR-A- 2 430 810
- GB-A- 1 452 037
- US-A- 4 014 681

## Beschreibung

Die Erfindung betrifft ein Verfahren zum Entsorgen von organischen und anorganischen Stoffen durch Pyrolyse, wobei die dabei entstehenden Abgase erfaßt, gesammelt, gereinigt und abgeschieden werden, insbesondere ein Verfahren zum Herstellen von Stahl oder Stahlvorprodukten aus mit organischen Substanzen verunreinigtem Schrott, sowie eine Vorrichtung zur Durchführung des Verfahrens.

Weiters betrifft die Erfindung ein Verfahren für die Wiederverwertung von organischen und anorganischen Stoffen sowie von Gemischen aus beiden durch Einschmelzen der metallischen Bestandteile und gleichzeitiger Pyrolyse der Organik, wobei alle entstehenden festen, flüssigen oder gasförmigen Reaktionsstoffe erfaßt, gesammelt, gereinigt, aufbereitet und für eine Wiederverwertung als Rohstoffe eingesetzt werden, insbesondere zum Recycling von Stahl- und Nichteisenmetallschrotten mit Organik sowie Verbundwerkstoffen aber auch Organik allein sowie eine Vorrichtung zur Durchführung des Verfahrens.

Messungen der Abgase von metallurgischen Schmelzprozessen haben gezeigt, daß beim Aufheiz- und Schmelzvorgang von Schrottarten, die mit organischen Bestandteilen (Kunststoffe, Lacke, Überzüge etc.) verunreinigt sind, unter den gegebenen chemischen und physikalischen Prozeßablaufbedingungen, insbesondere in der Abgaslinie, die Bildung von teils toxischen polychlorierten Dibenzodioxinen und Furanen (PCDD und PCDF) nicht mit ausreichender Sicherheit verhinderbar ist. Durch künftige Verordnungen wird die Emission von PCDD und PCDF mit einem Toxizitätsäquivalent von TE = 0,1 ng/Nm³ Abgas behördlich entsprechend ihres toxikologischen Äquivalents begrenzt. Für die Lagerung von festen Industrieabfällen wird künftig ein TE ≦ 1,0 ng/g für eine Deponierung vorgeschrieben.

Kohlenstoff ist in der Stahlschrottschmelztechnik insbesondere beim Frischprozeß ein wichtiges Element. Vor allem als billiger Wärmebringer hat er beim oxydierenden Schmelzprozeß Bedeutung. Seine Wärmenutzung ist im Umsatz von C zu CO nutzbar, jedoch nur teilweise bei der nötigen Vollverbrennung zu CO₂. Bedingt dadurch emittieren die bekannten Schrottschmelzprozesse, die mit Verwendung von Kohlenstoff oder fossiler Energie als Wärmeträger arbeiten, in ihrem Abgas beträchtliche Mengen CO₂. Wie aus vielen ökologischen Publikationen bekannt, trägt CO₂ wesentlich zur Steigerung des Treibhauseffektes der Erdatmosphäre bei. Die Verminderung von CO₂-Emissionen, verknüpft mit optimierter Energienutzung bei schmelzmetallurgischen Prozessen, ist im Zuge der fortschreitenden Industrialisierung ein wichtiges Aufgabengebiet.

Diese Situation der beschriebenen Emissionsentstehung beim Schrottschmelzen könnte dazu führen, daß der Einsatz von Schrottarten mit organischen Beimengungen (wie z.B. bei Auto- oder Haushaltsschrott sowie bei Verbundwerkstoffen) in Zukunft für konventionelle Schrottschmelzöfen aus ökonomischen oder ökologischen Gründen extremen Einschränkungen unterzogen werden muß. Andererseits ist ein umweltfreundliches Recycling gebrauchter Güter aus Wirtschafts- und Umweltgründen geboten. Ein Optimum wäre die Gewinnung von Gasen und Flüssigkeiten bei der Verarbeitung von Schrotten, die mit organischen Stoffen durchsetzt ist, aus denen wieder neue organische Substanzen erzeugt werden könnten.

Die DE-A- 32 07 203 betrifft ein Verfahren zur Vergasung von Hausmüll und ähnlichen Abfällen, wobei das zu entsorgende Vergasungsgut unterhalb der Oberfläche einer Eisenschmelze eingedrückt und als Oxidationsmittel Luft, Sauerstoff, Wasser oder deren Gemische zudosiert werden.
Weiters ist aus der FR-A- 2 430 810 eine Anlage zum Gießen von Legierungen unter eine Inertatmosphäre bekannt, wobei als Alternative zu einem Inertgasspeicher gegebenenfalls auch eine Vakuumpumpe an die entsprechende Versorgungs- bzw. Absaugleitung angeschlossen werden kann.

Bezüglich der Bildung von Dioxinen und Furanen in Prozeßgasen ist bekannt, daß sie durch folgende Faktoren bestimmt und begünstigt wird:
- Bildung von Aromaten
- Gegenwart von Chloriden
- Gegenwart von gasförmigem Sauerstoff
- zeitlich relativ langsames und inhomogenes Durchschreiten des Temperaturbereiches von ca. 200 bis 600°C bei Erwärmung oder Abkühlung
- katalytische Wirkung von Metallchloriden oder Wasserdampf
Zudem lagern sich Dioxine und Furane vorzüglich auch an Staubpartikeln des Abgases an, d.h. erhöhter Staubaustrag durch verbesserte Filterung bringt zusätzliche Probleme durch die Dioxin-Behaftungen des Staubes. Es ist dann eine längerdauernde thermische Staubbehandlung, bei der eine Zersetzung der Dioxine und Furane eintritt, erforderlich.

Zur Filterung und Abscheidung von PCDD und PCDF sind beispielsweise bei Müllverbrennungsanlagen technisch aufwendige und teure Abgaskühl- und Reinigungsanlagen, denen noch ein Aktivkohlefilter nachzuschalten ist, notwendig. Ähnliche Prozeßgasbehandlungsmethoden sind - nach entsprechender prozeß- und anlagenspezifischer Modifizierung - Schrottschmelzanlagen nachschaltbar. Wegen der hohen, im Schmelzprozeß meist diskontinuierlich anfallenden Abgasmengen, verbunden mit angeführten, häufig hohen CO₂-Gehalten und der hohen Staubbeladung der Abgase, bei konventionellen Schmelztechniken, wird jedoch voraussichtlich eine künftige Anwendung derartiger Abgasbehandlungstechniken technisch problematisch oder wirtschaftlich nicht tragbar sein.

Andererseits entstehen bei Verbrennungsvorgängen und bei der Stahlerzeugung anorganische Stäube meist oxydischer Art, z.B. Zn-Oxyd aus Zinküberzügen von Stahlblechen, deren Entsorgung zunehmend große Schwierigkeiten bereitet.

Die Erfindung stellt sich die Aufgabe, ein Verfahren der eingangs beschriebenen Art sowie eine Vorrichtung zur Durchführung des Verfahrens zu schaffen, bei welchen unter Gewährleistung der Entstehung geringster Abgasmengen mit möglichst niedrigem Bildungspotential für Dioxine und Furane eine starke Reduktion der CO₂-Emission sowie eine Einhaltung bzw. Unterschreitung der behördlichen Emissions-Grenzwerte sichergestellt ist. Weiters soll eine einfache Wiedergewinnung von anorganischen Substanzen und von Stoffen, die zur Herstellung von organischen und anorganischen Substanzen verwendet werden können, möglich sein.

Diese Aufgabe wird erfindungsgemäß dadurch gelöst, daß die Stoffe in einen unter Unterdruck stehenden, eine Schmelze oder einen Feststoff aus einer Metallegierung, insbesondere eine Stahl- oder Nichteisenmetallschmelze oder hochgekohltes Eisen, enthaltenden Induktionsofen unter Unterdruck chargiert und in diesem nahe der Flüssigkeitsmetalltemperatur vergast und pyrolisiert werden, wobei ein gasförmiger O₂-Eintrag unterbunden wird.

Durch Chargieren und Einschmelzen der die Stoffe enthaltenden Substanzen bei Metallverflüssigungstemperaturen über 700°C und unter Unterdruck ergeben sich folgende Vorteile:
- geringe Abgasmengen
- vollständige Abgaserfassung
- Verhinderung von Eintrag von gasförmigem O₂ durch ausreichenden Unterdruck
- geringster Staubgehalt, kein CO₂ und NOₓ im Abgas
- weitgehende Vermeidung von chlorierten und nicht-chlorierten Aromatverbindungen der Typen PCDD und PCDF durch Abwesenheit von gasförmigem O₂.
- Wiedergewinnung von Rohstoffen zur erneuten Erzeugung der organischen und anorganischen Substanzen aus dem Flüssigmetall und der Gasphase.

Eine besonders hohe Energieausbeute ist gegeben, wenn die Schmelze im Induktionsofen blank gehalten wird.

Es kann von Vorteil sein, wenn die Schmelze im Induktionsofen mit Schlacke bedeckt wird.

Gemäß einer bevorzugten Ausführungsform des erfindungsgemäßen Verfahrens wird zur Herstellung von Metall oder Metallvorprodukten mit organischen Substanzen verunreinigter Metallschrott, insbesondere Automobilschrott, verwendet.

Vorteilhaft wird von der sich im Induktionsofen bildenden Schmelze weniger als drei Viertel abgestochen und werden in die im Induktionsofen verbleibende flüssige oder erstarrte Restschmelze Schrott, organische oder anorganische Stoffe und/oder Mischungen aus beiden chargiert.

Zweckmäßig werden die sich beim Reinigen und Abscheiden der bei der Pyrolyse entstehenden Abgase bildenden Stoffe gesammelt und einer Wiederverwertung zugeführt und die dabei verflüssigbaren Bestandteile, insbesonders schwere Kohlenwasserstoffe, in Kühlfallen ausgefroren und als Rohstoffe wiederverwendet, wobei das verbleibende Prozeßgas im wesentlichen aus H₂, CO, CH₄ besteht und als hochwertiger Rohstoff für die Produktion organischer Stoffe oder als Heiz- oder Reaktionsgas verwendbar ist.

Beim erfindungsgemäßen Verfahren fallen infolge der hohen Pyrolyse-Temperaturen im Stahlschrott vorhandene Begleitmaterialien, wie z.B. Zink, Blei und dergleichen metallisch an, sodaß sie unmittelbar nach einer Trennung einer Wiederverwertung zugeführt werden können.

Eine Vorrichtung zur Durchführung des Verfahrens mit einem gegen die Außenatmosphäre abgeschlossenen Induktionsofen, der von einem gasdichten Behälter umschlossen ist und eine gegen die Außenatmosphäre abgeschlossene Chargiereinrichtung aufweist, oder dem ein Vakuumdeckel aufgesetzt ist, in dem eine ein Schleusensystem aufweisende Chargiereinrichtung integriert ist, und einer an den Behälter beziehungsweise Vakuumdeckel angeschlossenen, einen Unterdruck erzeugende Vakuumpumpe ist dadurch gekennzeichnet, daß der Behälter beziehungsweise Vakuumdeckel eine Abgasabsaugung aufweist, wobei der einen Unterdruck erzeugenden Vakuumpumpe, die zur Erzeugung eines Unterdrucks und zur Absaugung der beim Einschmelzen des Schrotts entstehenden Abgase dient, eine Gasreinigungsanlage vorgeschaltet ist, und daß der Behälter mit einer verschließbaren Abstichöffnung ausgestattet ist.

Der Abstich gestaltet sich besonders einfach, wenn der Induktionsofen innerhalb des Behälters kippbar ist und in gekippter Stellung mit einer Ausgießschnauze die in einer Seitenwand vorgesehene Abstichöffnung durchragt oder wenn der Ofen mit dem gasdichten Deckel versehen ist, der beim Abstich verfahren oder ausgeschwenkt wird.

Um auch während des Abstiches ein Freisetzen von Abgasen vollständig zu verhindern, ist zweckmäßig neben dem Behälter ein weiterer Behälter zur Aufnahme einer Abstichpfanne angeordnet, wobei die Abstichöffnung in einer zwischen den beiden Behältern vorgesehenen entfernbaren Trennwand vorgesehen ist und der die Abstichpfanne aufnehmende Behälter ebenfalls an eine Unterdruckpumpe angeschlossen ist.

Vorteilhaft ist an der Decke des den Induktionsofen aufnehmenden Behälters ein Hitzeschild angeordnet.

Um eine metallurgische Behandlung der Schmelze ohne Abgasfreisetzung durchführen zu können, sind zweckmäßig an der Decke des den Induktionsofen aufnehmenden Behälters oder dem Deckel des Induktionsofens Zugabeeinrichtungen zum Einbringen von festen Betriebsstoffen und Legierungsmittel in den als Tiegel ausgebildeten Induktionsofen vorgesehen.

Vorteilhaft ist an der Decke des den Induktionsofen aufnehmenden Behälters eine verschließbare Öffnung zum Ein- und Ausbringen einer Proben- und/oder Meßsondenlanze vorgesehen.

Um eventuell in den Abgasen noch vorhandene Problemstoffe abscheiden zu können, weist die Gasreinigungsanlage einen Feststoffabscheider sowie einen diesem nachgeordneten weiteren Abscheider für gasförmige, verflüssigbare Prozeßstoffe auf.

Vorzugsweise sind die verflüssigbaren Prozeßstoffe mit einer Rückführanlage zur Schmelze rückführbar. Diese Rückführung führt zu einer weiteren Pyrolyse der verflüssigbaren Prozeßstoffe, und es entsteht weiteres Prozeßgas.

Vorteilhaft ist der Gasreinigungsanlage ein Gastank zum Sammeln und Speichern der Prozeßgase nachgeordnet.

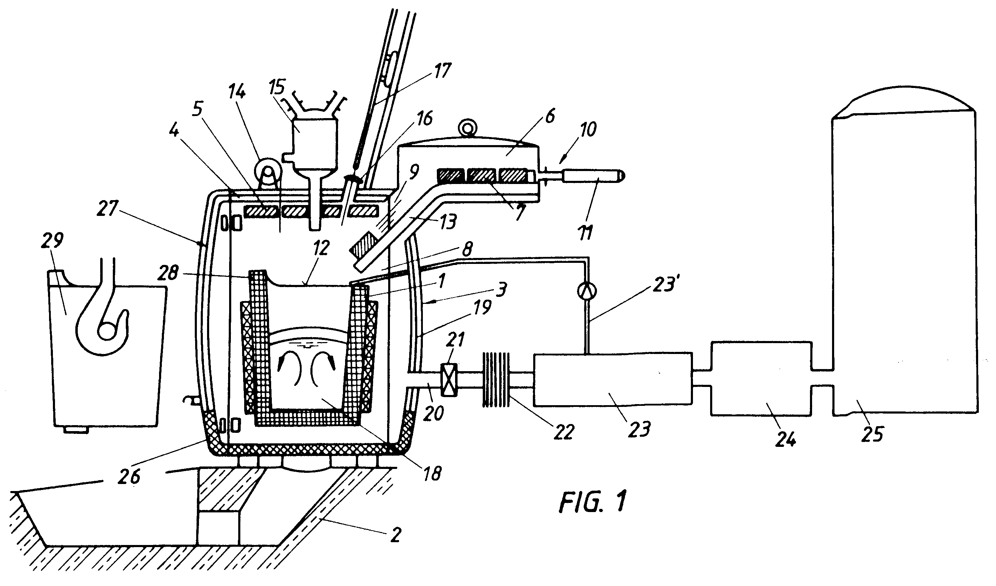

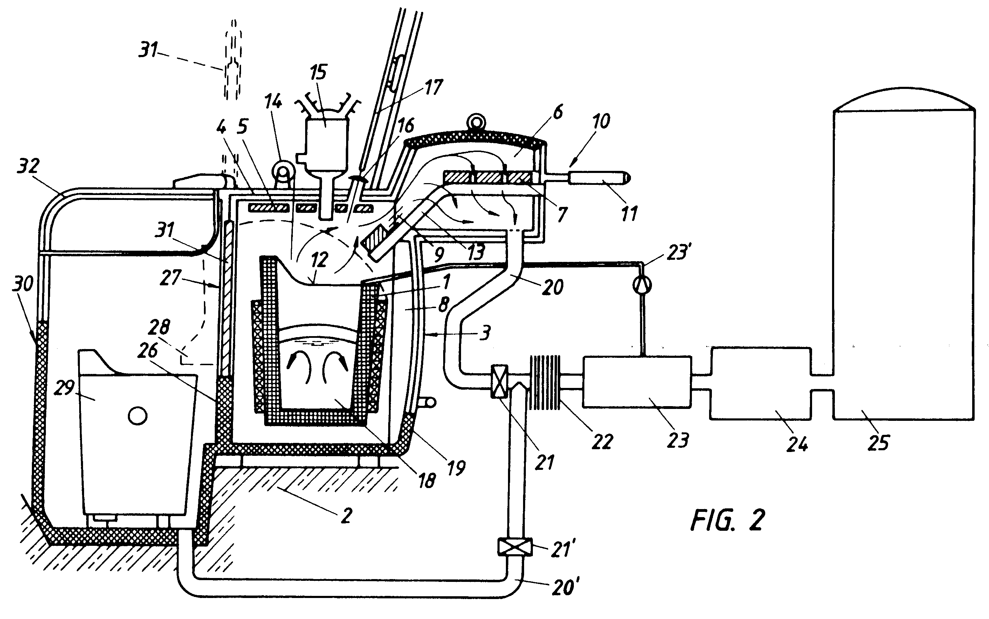

Die Erfindung ist nachfolgend anhand der Zeichnung näher erläutert, wobei Fig. 1 eine erste Ausführungsform einer Vorrichtung zur Durchführung des Verfahrens in schematischer Darstellung im Schnitt veranschaulicht. Fig. 2 zeigt in zu Fig. 1 analoger Darstellung eine weitere Ausführungsform.

Mit 1 ist ein als Tiegel ausgebildeter Induktionsofen bezeichnet, der gegenüber dem Fundament 2 kippbar gelagert ist. Dieser Tiegelinduktionsofen 1 dient zum Einschmelzen von diversen Metallschrottsorten, die Beimengungen an organischen Stoffen (Plastik, Kunststoff oder sonstige organische und anorganische Bestandteile) enthalten. Der Tiegelinduktionsofen 1 ist in einem gasdichten Behälter 3 eingesetzt, der den Tiegelinduktionsofen 1 umgibt. Gemäß einer nicht dargestellten Ausführungsform kann der Tiegelinduktionsofen selbst mit einem als Vakuumhaube ausgebildeten Deckel versehen sein, der den Tiegelinduktionsofen gasdicht abschließt.

Die Decke 4 des Behälters 3 ist mit einem wassergekühlten Hitzeschild 5 ausgestattet. Seitlich des Behälters 3 ist in Höhe der Decke 4 eine Chargierkammer 6 zum Chargieren von Metallschrottpaketen 7, z.B. Autoschrottpaketen oder losem Schrott und Organik, angeordnet, die mit dem Innenraum 8 des Behälters 3 über eine Öffnung 9 verbunden ist. Die Chargierkammer 6 ist mit einer Chargiereinrichtung 10 ausgestattet, die Schleusen zum Einbringen der Metallschrottpakete 7 und/oder der Organik sowie eine von außen betätigbare Einrichtung 11 zum Einbringen der Metallschrottpakete 7 und/oder der Organik in den Tiegelinduktionsofen 1 über eine zur Tiegelöffnung 12 gerichtete Rutsche 13 aufweist.

An der Decke 4 des Tiegelinduktionsofens 1 sind diverse Einrichtungen 14, 15 zum Zugeben von Betriebsstoffen und Legierungsmittel vorgesehen, die die Decke 4 gasdicht durchsetzen. Weiters ist eine an der Decke 4 verschließbare Öffnung 16 vorgesehen, durch die eine eine Meß- und/oder Probenahmesonde tragende Lanze 17, beispielsweise zur Temperaturmessung, in die im Tiegelinduktionsofen 1 gebildete Schmelze 18 einbringbar ist. Neben dem Hitzeschild 5 ist auch der Oberteil des Behälters 3 wassergekühlt.

An einer Seitenwand 19 des Behälters 3 schließt eine Abgasleitung 20 an, die mit einem Vakuumschieber 21 absperrbar ist. In dieser Leitung ist eine Abscheideanlage 22 zum Abscheiden von festen und sublimierbaren Stoffen, eine Vakuumpumpe 24 sowie eine weitere Abscheideanlage 23 für die in den Abgasen noch enthaltenen gasförmigen Substanzen installiert. Sie mündet schließlich in einen Prozeßgastank 25. Für eine etwaige Rückführung der verflüssigbaren Prozeßstoffe ist eine Rückführeinrichtung 23' zur Schmelze vorgesehen. Diese Rückführung führt zu einer weiteren Pyrolyse der verflüssigbaren Prozeßstoffe, und es entsteht weiteres Prozeßgas.

An der der Seitenwand 19, von der die Abgasleitung 20 ausgeht, gegenüberliegenden Seitenwand 26 ist eine gasdicht verschließbare Abstichöffnung 27 vorgesehen, durch die der in Abstichstellung gekippte Tiegelinduktionsofen 1 mit seiner Abstichschnauze 28 über eine bereitgestellte Pfanne 29 ragt.

Gemäß der in Fig. 2 dargestellten Ausführungsform ist zum Zweck des Vermeidens von Abgasen während des Abstiches neben dem Behälter 3 ein weiterer Behälter 30 angebaut, wobei die Abstichöffnung 27 in einer zwischen den beiden Behältern 3, 30 vorgesehen Trennwand 26 liegt. Zum Verschließen der Abstichöffnung 27 ist ein Schieber 31 vorgesehen, der vertikal nach oben in die strichlierte Stellung bringbar ist. Die Decke 32 des weiteren Behälters 30 ist zwecks Ein- und Ausbringens der die Schmelze 18 aufnehmenden Pfanne 29 abnehmbar bzw. ausschwenkbar.

Bei dieser Ausführungsform gehen Abgasleitungen 20, 20' von der Chargierkammer 6, über die auch der erste, den Tiegelinduktionsofen aufnehmende Behälter 3 evakuierbar ist, und vom zweiten Behälter 30, der die Pfanne 29 aufnimmt, aus, die beide mit jeweils einem Vakuumschieber 21, 21' ausgestattet sind und noch vor dem Staubabscheider 22 zusammenmünden. Hierdurch erfolgt der Abstich ebenfalls unter Unterdruck.

Nachfolgend ist die Funktion der Anlage beim Herstellen von Metall, wie z.B. Stahl aus Schrott beschrieben:
Bei Abstich der vorangehenden Schmelze wird ein Flüssigstahlrest von etwa 1/3 des Abstichgewichtes im Tiegelinduktionsofen 1 gelassen. Der Tiegelinduktionsofen 1 wird in die Schmelzposition zurückgekippt (Ofenachse vertikal), die Abstichöffnung 27 des Behälters 3 geschlossen und der Druck über die Unterdruckpumpe 24 auf den erforderlichen Unterdruck gesenkt.

Nachdem dieser erreicht ist, wird dem Tiegelinduktionsofen 1 die entsprechende elektrische Schmelzenergie zugeführt und mit dem kontinuierlichen Chargieren von Schrott 7 mit organischen Bestandteilen aus der ebenfalls evakuierten Schleuse 6 begonnen.

Während des Schmelzens können aus dem Zuschlagstoffesystem 14 und 15 Legierungsstoffe und Schlackenbildner in den Ofen zugegeben werden.

Der Kunststoffanteil des Schrottes 7 wird beim Eintauchen in die flüssige Schmelze oder bei der Aufgabe auf eine heiße feste Restschmelze oder bereits darüber durch eine Pyrolysereaktion bei Metallschmelztemperaturen von über 700°C (bei Stahl ca. 1600°C) in feste, gasförmige, sublimierbare und verflüssigbare Pyrolyseprodukte (z.B. Ruß, Kohlenwasserstoffe, H₂, Cl₂ usw.) zersetzt.

Entstehende Stäube und Metalldämpfe werden durch eine Abscheideanlage 22 entfernt. Die verflüssigbaren Bestandteile des Abgases werden in Kühlfallen der Abscheideanlage 23 ausgefroren. Die verbleibenden Gase werden im Prozeßtank 25 gesammelt.

Nachdem der gesamte chargierte Schrott im Tiegelinduktionsofen 1 geschmolzen ist, wird der Schrott im Tiegelinduktionsofen auf Abstichtemperatur überhitzt, der Behälter 3 durch Fluten mit Stickstoff oder Luft auf Atmosphärendruck gebracht, die Abstichöffnung 27 geöffnet und der Flüssigstahl in die Pfanne 29 geleert.

Für den Betrieb der Anlage mit Müll aus organischen Stoffen wird wie folgt vorgegangen:
Im Tiegelinduktionsofen 1 wird unter Unterdruck eine Flüssigstahlschmelze aus Eisenschrott erschmolzen.

Nachdem diese Schmelze einen Temperaturbereich von mindestens 1570°C erreicht hat, wird durch die Zugabevorrichtung kontinuierlich Müll aus der Chargierkammer 6 auf die Schmelzoberfläche gegeben. Bei diesen Temperaturen wandelt sich der organische Teil des Mülls durch Pyrolyse in Wasserstoff, Kohlenwasserstoffe, Kohlenstoff und sonstige gasförmige Produkte um. Die entstehenden Pyrolyseprodukte werden wie bei der Schrotteinschmelzvariante in der Abscheideanlage 22 und 23 behandelt.

Die Stahlschmelze wird während des gesamten Vorganges über viele Stunden auf etwa konstanter Temperatur gehalten.

Dabei wird die Zufuhr von elektrischer Energie so geregelt, daß keine wesentlichen Temperaturschwankungen des Bades auftreten.

Die Zusammensetzung der Schmelze 18 kann über die Einrichtung 14 bei Bedarf verändert werden. Falls erforderlich, kann die Schmelze 18 mit einer Schlacke aus der Einrichtung 15 bedeckt werden.

Die Prozeßzeit ist lediglich begrenzt durch die Haltbarkeit der Feuerfestzustellung des Tiegelinduktionsofens 1. Während Stillstandszeiten kann die Schmelze 18 im Tiegelinduktionsofen auf einer konstanten Temperatur gehalten werden.

In gleicher Weise wie feste organische Stoffe können organische Flüssigkeiten behandelt werden, indem man diese kontinuierlich auf die Schmelzenoberfläche aufgibt.

Im folgenden ist der Betrieb der Anlage zur Verarbeitung von anorganischen Stäuben beschrieben:
Im Tiegelinduktionsofen 1 wird unter Unterdruck eine Schmelze einer Eisenlegierung aus Eisenschrott und Kohlenstoff erschmolzen, die einen Kohlenstoffgehalt von 2-5 % hat und den Tiegelinhalt zu etwa 1/3 ausfüllt.

Nachdem diese Schmelze einen Temperaturbereich von mindestens 1570°C erreicht hat, wird durch die Zugabevorrichtung kontinuierlich anorganischer Staub, eventuell vermischt mit Aluminium oder Ferrosilizium zur Unterdrückung einer zu heftigen Kochreaktion bei oxydischen Stäuben aus der Chargierkammer 6 auf die Schmelzoberfläche gegeben. Bei dieser Temperatur werden die oxydischen Stäube durch Kohlenstoff und die anderen Reduktionsmittel reduziert, und die Metalle gehen entweder in die Basisschmelze über, oder werden nach ihrem Verdampfen als Metalldampf in der Abscheideanlage 22 abgeschieden.

Die Schmelze wird während des gesamten Vorganges auf etwa konstanter Temperatur gehalten und dann abgestochen, wenn so viel Schmelze angefallen ist, daß etwaige Kochreaktionen die Schmelze zum Überlaufen bringen würden.

## Patentansprüche

1. Verfahren zum Entsorgen von organischen und anorganischen Stoffen durch Schmelzen der Anorganik und Pyrolyse der Organik, wobei die dabei entstehenden Abgase erfaßt, gesammelt, gereinigt und abgeschieden werden, dadurch gekennzeichnet, daß die Stoffe in einen unter Unterdruck stehenden, eine Schmelze (18) oder einen Feststoff aus einer Metallegierung, insbesondere eine Stahl- oder Nichteisenmetallschmelze oder hochgekohltes Eisen, enthaltenden Induktionsofen (1) unter Unterdruck chargiert und in diesem nahe der Flüssigmetalltemperatur vergast und pyrolisiert werden, wobei ein gasförmiger O₂-Eintrag unterbunden wird.

2. Verfahren nach Anspruch 1, dadurch gekennzeichnet, daß die Schmelze (18) im Induktionsofen (1) blank gehalten wird.

3. Verfahren nach Anspruch 1, dadurch gekennzeichnet, daß die Schmelze (18) im Induktionsofen (1) mit Schlacke bedeckt wird.

4. Verfahren nach einem oder mehreren der Ansprüche 1 bis 3, dadurch gekennzeichnet, daß zum Herstellen von Metall oder Metallvorprodukten mit organischen Substanzen verunreinigter Metallschrott (7), insbesondere Automobilschrott, verwendet wird.

5. Verfahren nach Anspruch 4, dadurch gekennzeichnet, daß von der sich im Induktionsofen (1) bildenden Schmelze (18) weniger als drei Viertel abgestochen wird und daß in die im Induktionsofen (1) verbleibende flüssige oder erstarrte Restschmelze (18) Schrott (7), organische oder anorganische Stoffe und/oder Mischungen aus beiden chargiert werden.

6. Verfahren nach einem oder mehreren der Ansprüche 1 bis 5, dadurch gekennzeichnet, daß die sich beim Reinigen und Abscheiden der bei der Pyrolyse entstehenden Abgase bildenden Stoffe gesammelt und einer Wiederverwertung zugeführt werden und die dabei verflüssigbaren Bestandteile, insbesonders schwere Kohlenwasserstoffe, in Kühlfallen ausgefroren und als Rohstoffe wiederverwendet werden, wobei das verbleibende Prozeßgas im wesentlichen aus H₂, CO, CH₄ besteht und als hochwertiger Rohstoff für die Produktion organischer Stoffe oder als Heiz- oder Reaktionsgas verwendet ist.

7. Anlage zur Durchführung des Verfahrens nach einem oder mehreren der Ansprüche 1 bis 6, mit einem gegen die Außenatmosphäre abgeschlossenen Induktionsofen (1), der von einem gasdichten Behälter (3) umschlossen ist und eine gegen die Außenatmosphäre abgeschlossene Chargiereinrichtung aufweist, oder dem ein Vakuumdeckel aufgesetzt ist, in dem eine ein Schleusensystem aufweisende Chargiereinrichtung (10) integriert ist, und einer an den Behälter (3) - beziehungsweise Vakuumdeckel angeschlossenen, einen Unterdruck erzeugende Vakuumpumpe (24), dadurch gekennzeichnet, daß der Behälter (3) - beziehungsweise Vakuumdeckel eine Abgasabsaugung aufweist, wobei der einen Unterdruck erzeugenden Vakuumpumpe (24), die zur Erzeugung eines Unterdrucks und zur Absaugung der beim Einschmelzen des Schrotts entstehenden Abgase dient, eine Gasreinigungsanlage (23,22) vorgeschaltet ist, und daß der Behälter (3) mit einer verschließbaren Abstichöffnung (27) ausgestattet ist.

8. Anlage nach Anspruch 7, dadurch gekennzeichnet, daß der Induktionsofen (1) innerhalb des Behälters (3) kippbar ist und in gekippter Stellung mit einer Ausgießschnauze (28) die in einer Seitenwand (26) vorgesehene Abstichöffnung (27) durchragt oder daß der Ofen (1) mit dem gasdichten Deckel versehen ist, der beim Abstich verfahren oder ausgeschwenkt wird.

9. Anlage nach Anspruch 7 oder 8, dadurch gekennzeichnet, daß neben dem Behälter (3) ein weiterer Behälter (30) zur Aufnahme einer Abstichpfanne (29) angeordnet ist, wobei die Abstichöffnung (27) in einer zwischen den beiden Behältern (3, 30) vorgesehenen entfernbaren Trennwand (26) vorgesehen ist und der die Abstichpfanne (29) aufnehmende Behälter (30) an eine Unterdruckpumpe (24) angeschlossen ist.

10. Anlage nach einem oder mehreren der Ansprüche 7 bis 9, dadurch gekennzeichnet, daß an der Decke (4) des den Induktionsofen (1) aufnehmenden Behälters (3) ein Hitzeschild (5) angeordnet ist.

11. Anlage nach einem oder mehreren der Ansprüche 7 bis 10, dadurch gekennzeichnet, daß an der Decke (4) des den Induktionsofen (1) aufnehmenden Behälters (3) oder dem Deckel des Induktionsofens Zugabeeinrichtungen (14, 15) zum Einbringen von festen Betriebsstoffen und Legierungsmittel in den als Tiegel ausgebildeten Induktionsofen (1) vorgesehen sind.

12. Anlage nach einem oder mehreren der Ansprüche 7 bis 11, dadurch gekennzeichnet, daß an der Decke (4) des den Induktionsofen (1) aufnehmenden Behälters (3) oder dem Deckel des Induktionsofens eine verschließbare Öffnung (16) zum Ein- und Ausbringen einer Proben- und/oder Meßsondenlanze (17) vorgesehen ist.

13. Anlage nach einem oder mehreren der Ansprüche 7 bis 12, dadurch gekennzeichnet, daß die Gasreinigungsanlage einen Feststoffabscheider (22) sowie einen diesem nachgeordneten weiteren Abscheider (23) für gasförmige, verflüssigbare Prozeßstoffe aufweist.

14. Anlage nach einem oder mehreren der Ansprüche 7 bis 13, dadurch gekennzeichnet, daß die verflüssigbaren Prozeßstoffe mit einer Rückführanlage (23') zur Schmelze (18) rückführbar sind.

15. Anlage nach einem oder mehreren der Ansprüche 7 bis 14, dadurch gekennzeichnet, daß der Gasreinigungsanlage (22, 23) ein Gastank (25) zum Sammeln und Speichern der Prozeßgase nachgeordnet ist.

## Claims

1. A method for the disposal of organic and inorganic substances by melting the inorganic matter and pyrolyzing the organic matter, wherein the offgases forming are seized, collected, purified and separated, characterized in that the substances are charged under negative pressure into an induction furnace (1) being under negative pressure and containing a melt (18) or a solid of a metal alloy, in particular, a steel or non-iron metal melt or high-carbon iron and are gasified close to the liquid-metal temperature and pyrolyzed in the same, the introduction of gaseous O₂ being prevented.

2. A method according to claim 1, characterized in that the melt (18) in the induction furnace (1) is kept bare.

3. A method according to claim 1, characterized in that the melt (18) in the induction furnace (1) is covered with slag.

4. A method according to one or several of claims 1 to 3, characterized in that metal scrap (7) contaminated with organic substances, in particular automobile scrap, is used for the production of metal or metal pre-products.

5. A method according to claim 4, characterized in that less than three fourths is tapped off the melt (18) forming in the induction furnace (1) and that scrap (7), organic or inorganic matter and/or mixtures of the two are charged into the liquid or solidified residual melt (18) remaining in the induction furnace (1).

6. A method according to one or several of claims 1 to 5, characterized in that the substances forming in purifying and separating the offgases forming during pyrolysis are collected and supplied to reutilization and the liquefiable components, in particular heavy hydrocarbons, are frozen out in cooling traps and are reused as raw materials, the remaining process gas essentially consisting of H₂, CO, CH₄ and being used as high-grade raw material for the production of organic matter or as a heating or reaction gas.

7. An arrangement for carrying out the method according to one or several of claims 1 to 6, comprising an induction furnace (1) sealed relative to the external atmosphere, enclosed by a gas-tight vessel (3) and including a charging means sealed relative to the external atmosphere or having a vacuum lid put thereon, in which a charging means (10) including a sleuce system is integrated, and a vacuum pump (24) connected to said vessel (3) or said vacuum lid for creating a negative pressure, characterized in that the vessel (3) or the vacuum lid, respectively, comprises an offgas exhauster, said negative pressure creating vacuum pump (24), which serves to create a negative pressure and to suck off the offgases forming during melting of said scrap, being preceded by a gas purification means (23, 22), and that the vessel (3) is provided with a closable tap hole (27).

8. An arrangement according to claim 7, characterized in that the induction furnace (1) is tiltable within the vessel (3) and, in the tilted position, projects through said tap opening (27) provided in a side wall (26) by a pouring spout (28), or that the furnace (1) is provided with said gas-tight lid, which is displaced or pivoted away during tapping.

9. An arrangement according to claim 7 or 8, characterized in that, adjacent said vessel (3), a further vessel (30) is arranged for accommodating a tapping ladle (29), said tap hole (27) being provided in a removable partition wall (26) provided between the two vessels (3, 30) and said vessel (30) accommodating said tapping ladle (29) being connected to a vacuum pump (24).

10. An arrangement according to one or several of claims 7 to 9, characterized in that a heat shield (5) is arranged on the ceiling (4) of the vessel (3) accommodating said induction furnace (1).

11. An arrangement according to one or several of claims 7 to 10, characterized in that feeding means (14, 15) for introducing solid operating substances and alloying agents into said induction furnace (1) designed as a crucible are provided on the ceiling (4) of the vessel (3) accommodating said induction furnace (1) or on said lid of the induction furnace (1).

12. An arrangement according to one or several of claims 7 to 11, characterized in that a closeable opening (16) for introducing and removing a sampling and/or measuring probe lance (17) is provided in the ceiling (4) of said vessel (3) accommodating said induction furnace (1) or in said lid of the induction furnace.

13. An arrangement according to one or several of claims 7 to 12, characterized in that the gas purification means comprises a solid matter separator (22) as well as a consecutively arranged further separator (23) for gaseous liquefiable process substances.

14. An arrangement according to one or several of claims 7 to 13, characterized in that the liquefiable process substances are capable of being recycled to the melt (18) by a recycling means (23').

15. An arrangement according to one or several of claims 7 to 14, characterized in that said gas purification means (22, 23) is followed by a gas tank (25) for collecting and storing the process gases.

## Revendications

1. Procédé pour la récuperation de matières organiques et inorganiques par mise en fusion des matières inorganiques et par pyrolyse des matières organiques, en saisant, collecter, purifier et séparer les gaz d'échappement s'y formant, caractérisé en ce que les matières sont chargés sous dépression dans un four à induction (1) étant sous dépression et contenant une fonte (18) ou de la matière solide d'un alliage métallique, en particulier une fonte d'acier ou non-ferrique ou du fer à haute teneur en carbone, et y sont gazéifiées près de la température de métal liquide et pyrolysées en empêchant l'introduction du O₂ gazeux.

2. Procédé selon la revendication 1, caractérisé en ce que la fonte (18) dans le four à induction (1) est maintenue blanche.

3. Procédé selon la revendication 1, caractérisé en ce que la fonte (18) dans le four à induction (1) est couverte de la scorie.

4. Procédé selon l'une ou plusieurs des revendications 1 à 3, caractérisé en ce que de la mitraille métallique (7) contaminée de matières organiques, en particulier de la mitraille d'automobile, est employée pour la production du métal ou de produits préaffinés métalliques.

5. Procédé selon la revendication 4, caractérisé en ce que moins de trois quarts de la fonte (18) formant dans le four à induction (1) sont percés et en ce que de la mitraille (7), des matières organiques ou inorganiques et/ou des mélanges de ces deux sont chargés dans la fonte résiduelle liquide ou solidifiée (18) restant dans le four à induction (1).

6. Procédé selon l'une ou plusieurs des revendications 1 à 5, caractérisé en ce que les matières formant lors de l'épuration et la séparation des gaz d'échappement formant dans la pyrolyse sont collectées et renvoyées à une réutilisation et les composants susceptibles d'être liquéfiés, en particulier les hydrocarbures lourds, sont séparés en étant congelés dans des pièges réfrigérants et sont réutilisés en tant que matières premières, le gaz de processus résiduel consistant essentiellement de H₂, CO, CH₄ et étant usé en tant que matière première pour la production des substances organiques ou en tant que gaz de chauffage ou de réaction.

7. Installation pour la mise en oeuvre du procédé selon l'une ou plusieurs des revendications 1 à 6, comportant un four à induction (1) fermé contre l'atmosphère extérieure et entouré d'un récipient étanche au gaz (3) et comprenant un moyen de chargement fermé contre l'atmosphère extérieure, ou sur lequel est posé un couvercle à vide dans lequel est incorporé un moyen de chargement (10) comprenant un système d'écluse, ainsi qu'une pompe à vide (24) créant une dépression, qui est reliée au récipient respectivement au couvercle à vide, caractérisée en ce que le récipient respectivement le couvercle à vide comporte une aspiration de gaz d'échappement, un dispositif d'épuration (23, 22) précédant la pompe à vide (24) créant dépression, qui sert à créer une dépression et à aspirer les gaz d'échappement formant au cours de la fusion des mitrailles, et en ce que le récipient (3) est prévu d'un trou de percée (27) qui peut être fermé.

8. Installation selon la revendication 7, caractérisée en ce que le four à induction (1) est basculant au sein du récipient (3) et, en position basculée, passe à travers le trou de percée (27) prévu dans une paroi latérale (26) par un bec de coulée (28), ou en ce que le four (1) est pourvu du courvercle étanche au gaz qui est déplacé ou pivoté en dehors au cours de la percée.

9. Installation selon la revendication 7 ou 8, caractérisée en ce qu'un récipient additionel (30) pour recevoir une poche de percée (29) est monté à côté du récipient (3), le trou de percée (27) étant prévu dans une cloison (26) amovible prévue entre les deux récipients (3, 30) et le récipient (30) recevant la poche de percée (29) étant relié à une pompe à vide (24).

10. Installation selon l'une ou plusieurs des revendications 7 à 9, caractérisée en ce qu'un écran thermique (5) est monté sur le plafond (4) du récipient (3) recevant le four à induction (1).

11. Installation selon l'une ou plusieurs des revendications 7 à 10, caractérisée en ce que des moyens d'alimentation (14, 15) sont prévus sur le plafond (4) du récipient (3) recevant le four à induction (1), ou sur le couvercle du four à induction, pour introduire des produits d'opération solides et des agents d'alliage dans le four à induction qui est configuré en tant que creuset.

12. Installation selon l'une ou plusieurs des revendications 7 à 11, caractérisée en ce qu'un orifice obturable (16) est prévu sur le plafond (4) du récipient (3) recevant le four à induction (1), ou sur le couvercle du four à induction, pour introduire et extraire une lance d'essai et/ou de tête de mesure (17).

13. Installation selon l'une ou plusieurs des revendications 7 à 12, caractérisée en ce que le dispositif d'épuration de gaz comprend un séparateur de matières solides (22) ainsi qu'un séparateur additionel (23) placé en aval de ce dernier pour des matières de processus gaseuses susceptibles d'être liquéfiées.

14. Installation selon l'une ou plusieurs des revendications 7 à 13, caractérisée en ce que les matières de processus susceptibles d'être liquéfiées sont recyclables à la fonte (18) au moyen d'un dispositif de retour (23').

15. Installation selon l'une ou plusieurs des revendications 7 à 14, caractérisée en ce qu'un réservoir de gaz (25) est placé an aval du dispositif d'épuration (22, 23) pour collecter et accumuler les gaz de processus.
